# EUROPEAN PATENT SPECIFICATION

(11) **EP 3 744 992 B1**
(45) Date of publication and mention of the grant of the patent: **26.01.2022**
(21) Application number: 19743867.4
(22) Date of filing: 25.01.2019
(51) Int. Cl.: F16C 33/38, F16C 19/16

(54) **ANGULAR BALL BEARING**
SCHRÄGKUGELLAGER
ROULEMENT À BILLES ANGULAIRE

(30) Priority: 26.01.2018 JP 2018011353
(43) Date of publication of application: 02.12.2020
(73) Proprietor: NSK LTD., Shinagawa-Ku Tokyo 141-8560 (JP)
(72) Inventor: SOGA Shuji, Fujisawa-shi, Kanagawa 251-8501 (JP); KATSUNO Yoshiaki, Fujisawa-shi, Kanagawa 251-8501 (JP); KENMOCHI Kenta, Fujisawa-shi, Kanagawa 251-8501 (JP)
(74) Representative: Grünecker Patent- und Rechtsanwälte PartG mbB
(86) International application number: PCT/JP2019/002574
(87) International publication number: WO 2019/146768

(56) References cited:
- EP-A1- 2 610 510
- EP-A1- 3 040 565
- WO-A1-2015/141021
- DE-A1-102007 034 023
- JP-A- 2005 155 759
- JP-A- 2007 263 211
- JP-A- 2008 095 929
- JP-A- 2014 126 195
- JP-A- 2014 126 195
- JP-A- 2016 041 980
- JP-B2- 4 910 938

## Description

### Technical Field

The present invention relates to an angular contact ball bearing, and more particularly to an angular contact ball bearing applicable to a spindle device or a motor of a machine tool.

### Background Art

An angular contact ball bearing or the like is widely used in a spindle of a machine tool. Known cages used for the angular contact ball bearing include an outer ring guided cage, an inner ring guided cage, and a ball guided cage. Among these, an outer ring guided cage is often used for an angular contact ball bearing used in high-speed rotation (for example, see Patent Documents 1 to 3).

In an angular contact ball bearing including an outer ring guided cage, balls come into contact with inner surfaces of cage pockets with a slight delay or advance on a ball basis due to a shape error between an inner ring raceway surface and an outer ring raceway surface in which the balls roll, a shape error of the balls, or misalignment or inclination of central axes of an inner ring and an outer ring of the bearing. For this reason, the cage may vibrate by itself and generate noise called cage noise.

A rolling bearing described in Patent Document 1 includes a bearing ring guided cage including a drive pocket having a small gap in a revolving direction between the cage and a rolling element and a non-drive pocket having a large gap in the revolving direction, in which the rolling element that drives the cage in a circumferential direction is limited, a driving force applied to the cage is constant, the cage is prevented from whirling, and cage noise is reduced.

In addition, an angular contact ball bearing used in a machine tool spindle or the like includes a known ball guide cage in which an inner diameter of one annular portion is larger than a pitch circle diameter of balls in order to raise a shoulder portion of an inner ring on a contact angle side (see Patent Documents 4 to 6).

### Prior Art Document

### Patent Document

Patent Document 1: JP-A-2013-137099
Patent Document 2: JP-A-2011-133062
Patent Document 3: JP-A-2008-240806
Patent Document 4: JP-A-2015-48874
Patent Document 5: JP-A-2015-117788
Patent Document 6: JP-A-2015-52365
Patent Document 7: DE 10 2007 034023 A1

### Summary of Invention

### Technical Problem

In the rolling bearing described in Patent Document 1, however, since the non-drive pocket and the drive pocket are provided, it is necessary for the non-drive pocket to have a larger pocket width in the circumferential direction than the drive pocket, and it is necessary to reduce the number of pockets (the number of rolling elements) as compared with a cage having a standard design. In addition, angular contact ball bearings described in Patent Documents 2 to 4 relate to a technology based on a ball guided cage and does not consider cage noise Patent Document 7 discloses an angular ball bearing according to the preamble of claim 1.

The present invention has been made in view of the problems described above and an object thereof is to provide an angular contact ball bearing including an outer ring guided cage capable of suppressing cage noise.

### Solution to Problem

The object of the present invention is achieved by the following configurations.
(1) An angular contact ball bearing includes: an outer ring having an outer ring raceway surface on an inner circumferential surface, an inner ring having an inner ring raceway surface on an outer circumferential surface, a plurality of balls rollably arranged at a predetermined contact angle between the outer ring raceway surface and the inner ring raceway surface, and an outer ring guided cage having pockets that rollably hold the plurality of balls.

The cage includes a pair of annular portions and a plurality of pillar portions arranged at predetermined intervals in a circumferential direction, the plurality of pillar portions connecting the pair of annular portions in an axial direction.

The cage has a step shaped or an inclined inner circumferential surface.

When a pitch circle diameter of the ball is PCD and a diameter clearance of a radial guide clearance of the cage is ΔL, an inner diameter D2 of the pocket at axial end portions satisfies PCD < D2 + ΔL.
(2) In the angular contact ball bearing according to (1), an inner diameter D1 of the pocket at an axially intermediate portion satisfies D1 + ΔL ≦ PCD.
(3) In the angular contact ball bearing according to (1) or (2), the cage includes a convex portion protruding radially inboard at an axially intermediate portion of the cage.
(4) In the angular contact ball bearing according to any one of (1) to (3), an inner circumferential surface of one of the pair of annular portions has a larger diameter than an inner circumferential surface of the other one of the pair of annular portions.
(5) In the angular contact ball bearing according to any one of (1) to (3), the cage includes a pair of inclined surface portions on the inner circumferential surface of the cage, each of the pair of inclined surface portions crossing the pillar portion from a respective one of the annular portions and having a reduced diameter toward an axially intermediate portion of the cage.
(6) In the angular contact ball bearing according to any one of (1) to (3), each of the pillar portions includes a pillar portion side convex portion protruding radially inboard from a position away from the axial end portions of the pocket inside in the axial direction, and
each of the pair of annular portions includes an annular portion side convex portion protruding radially inboard from a position away from the axial end portions of the pocket outside in the axial direction.

### Advantageous Effects of Invention

According to the angular contact ball bearing of the present invention, the cage has a step shaped or inclined inner circumferential surface, and the inner diameter D2 of the pocket at the axial end portions satisfies PCD < D2 + ΔL when the pitch circle diameter of the ball is PCD and the diameter clearance of the radial guide clearance of the cage is ΔL. Accordingly, when the cage moves in the axial direction in the angular contact ball bearing including the outer ring guide cage, the ball and an inner diameter opening of the pocket come into contact with each other so that a radial movement of the cage can be regulated and cage noise can be reduced.

### Brief Description of Drawings

Fig. 1 is a sectional view taken along a line X-A in Fig. 2 and showing a main part of an angular contact ball bearing according to a first embodiment of the present invention.
Fig. 2 is a sectional view of an axially intermediate portion of the angular contact ball bearing.
Fig. 3 is a perspective view of a cage.
Fig. 4 is a sectional view showing a ball and the cage in a state in which the ball drives the cage in a rotation direction of an axis.
Fig. 5A is a sectional view taken along a line X-B in Fig. 2 and showing a force acting on a contact portion between the ball and the cage by radial vibration of the cage according to the present embodiment, and Fig. 5B is a sectional view taken along the line X-B in Fig. 2 and showing a force acting on a contact portion between a ball and a cage in the related art by radial vibration of the cage.
Fig. 6 is a sectional view of an angular contact ball bearing according to a second embodiment of the present invention.
Fig. 7 is a sectional view of an angular contact ball bearing according to a third embodiment of the present invention.
Fig. 8 is a sectional view of an angular contact ball bearing according to a fourth embodiment of the present invention.
Fig. 9 is a sectional view of an angular contact ball bearing according to a modification of the fourth embodiment of the present invention.
Fig. 10 is a sectional view of an angular contact ball bearing according to a fifth embodiment of the present invention.
Fig. 11 is a sectional view of an angular contact ball bearing according to a first modification of the fifth embodiment of the present invention.
Fig. 12 is a sectional view of an angular contact ball bearing according to a second modification of the fifth embodiment of the present invention.
Fig. 13 is a sectional view of an angular contact ball bearing according to a sixth embodiment of the present invention.

### Description of Embodiment

Hereinafter, angular contact ball bearings according to embodiments of the present invention will be described in detail with reference to the drawings.

### (First Embodiment)

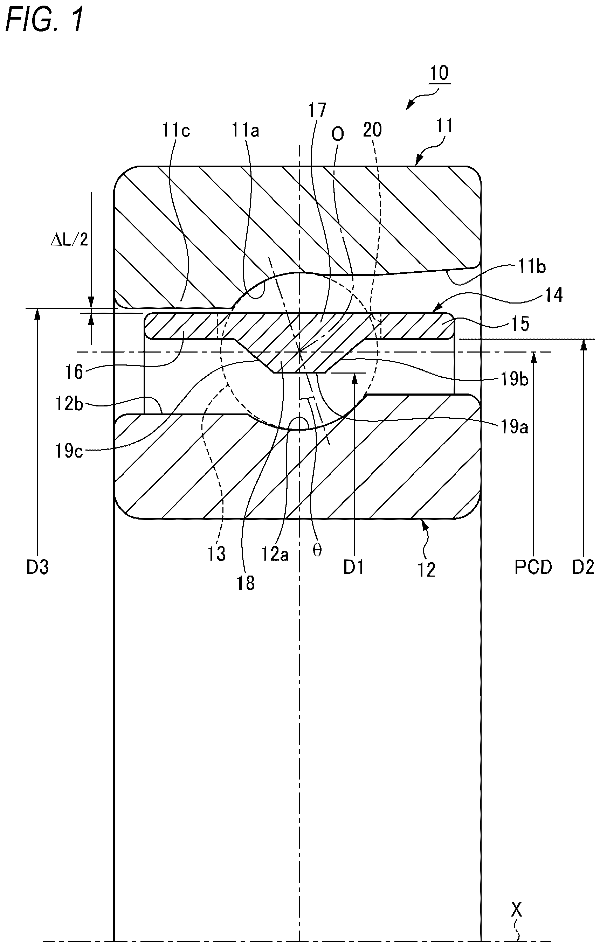

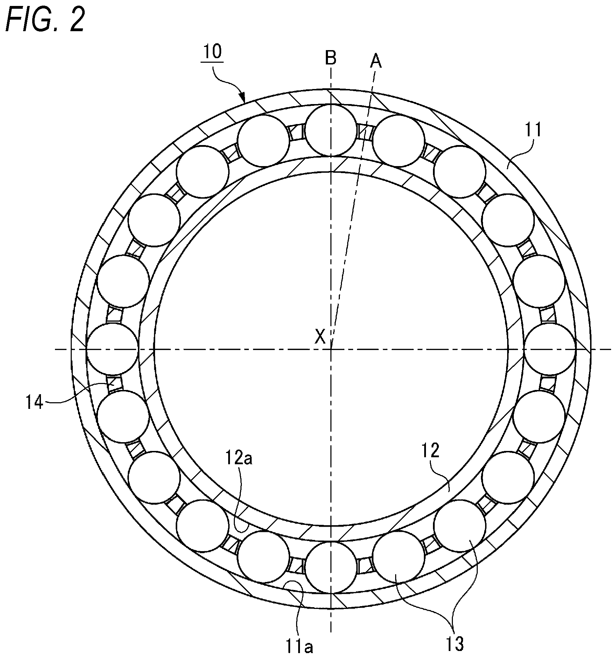

As shown in Figs. 1 and 2, an angular contact ball bearing 10 according to the first embodiment includes an outer ring 11 having an outer ring raceway surface 11a on an inner circumferential surface, an inner ring 12 having an inner ring raceway surface 12a on an outer circumferential surface, a plurality of balls 13 rollably arranged with a predetermined contact angle θ between the outer ring raceway surface 11a and the inner ring raceway surface 12a, and a cage 14 that rollably holds the plurality of balls 13.

The outer ring 11 is formed with a counter bore 11b on one side (bearing front surface side) of the outer ring raceway surface 11a in an axial direction. The inner ring 12 is formed with a counter bore 12b on the other side (axially back surface side) of the inner ring raceway surface 12a in the axial direction.

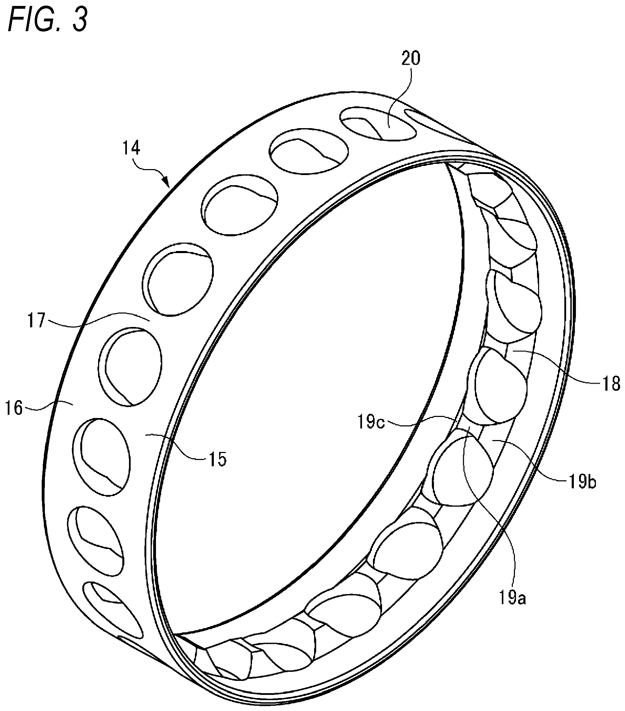

As also shown in Fig. 3, the cage 14 includes a pair of annular portions 15, 16, and a plurality of pillar portions 17 arranged at predetermined intervals in a circumferential direction. The plurality of pillar portions 17 connect the pair of annular portions 15, 16 in the axial direction. The cage 14 is an outer ring guided cage in which the annular portion 15 is guided by an inner circumferential surface of a shoulder portion 11c on the other side of the outer ring 11 in the axial direction. The pair of annular portions 15, 16 and two adjacent pillar portions 17 define a pocket 20 that holds the ball 13. The pocket 20 has a cylindrical shape.

The cage 14 may be made of any one of synthetic resin, metal, and the like. For example, the cage 14 made of synthetic resin may be a phenol resin containing a base material. In this case, as the base material, paper, cotton cloth, asbestos cloth, glass fiber cloth, and nylon fabric are used for a laminate, and wood powder, cotton, pulp, asbestos, mica, glass fiber or the like are used for a molded product. The cage 14 may also be resin such as polyamide, polyacetal, polyether ether ketone, polyimide, and polyphenylene sulfide, and a reinforcing material such as glass fiber, carbon fiber, and aramid fiber may be added to the resin if necessary. The cage 14 may also be made of iron plated with a copper alloy, silver plating, or the like.

The cage 14 has a step shaped inner circumferential surface. Specifically, each of the pillar portions 17 is formed with a convex portion 18 in the circumferential direction on an inner circumferential surface of an axially intermediate portion of the pillar portion 17. The convex portion 18 includes side surfaces of two adjacent pockets 20 in the circumferential direction, a cylindrical surface portion 19a in an axially intermediate portion of the convex portion 18, and inclined surface portions 19b, 19c on two sides of the convex portion 18 in the axial direction. A circumferential width of each of the inclined surface portions 19b, 19c gradually increases from the cylindrical surface portion 19a of the convex portion 18 toward an outer diameter side. The cage 14 includes two axial end portions of the pocket 20 having a largest axial width on the inner circumferential surface of the cage 14 other than the convex portion 18, and has a uniform inner diameter D2 until axial end surfaces of the pair of annular portions 15, 16.

In the present embodiment, as shown in Fig. 1, the inner diameter D2 of the pocket 20 at the two axial end portions is designed to satisfy PCD < D2 + ΔL when a pitch circle diameter of the balls is PCD and a diameter clearance (radial movement amount of the cage) of a radial guide clearance of the cage 14 is ΔL. Further, an inner diameter D1 of the pocket 20 at the axially intermediate portion defined by the cylindrical surface portion 19a of the convex portion 18 is designed to satisfy D1 + ΔL ≦ PCD.

When an inner diameter of the inner circumferential surface of the shoulder portion 11c of the outer ring 11 is D3, the diameter clearance ΔL of the radial guide clearance of the cage 14 is designed to satisfy 0 < ΔL ≦ 0.030D3. Further, the radial clearance ΔL of the radial guide clearance preferably satisfies 0 < ΔL ≦ 0.020D3, and more preferably satisfies 0.0002D3 ≦ ΔL ≦ 0.020D3.

That is, the diameter clearance ΔL of the radial guide clearance of the cage 14 is regulated to ΔL ≦ 0.030D3 (preferably ΔL ≦ 0.020D3) to restrict the radial movement amount of the cage 14, thereby preventing abnormal vibration of the cage 14 in the radial direction. Further, the diameter clearance ΔL of the radial guide clearance of the cage 14 is regulated to 0 < ΔL (preferably 0.0002D3 ≦ ΔL) to prevent the cage 14 from biting into the inner circumferential surface (guide surface) of the outer ring 11, and thereby the cage 14 is stably guided by the inner circumferential surface of the outer ring 11.

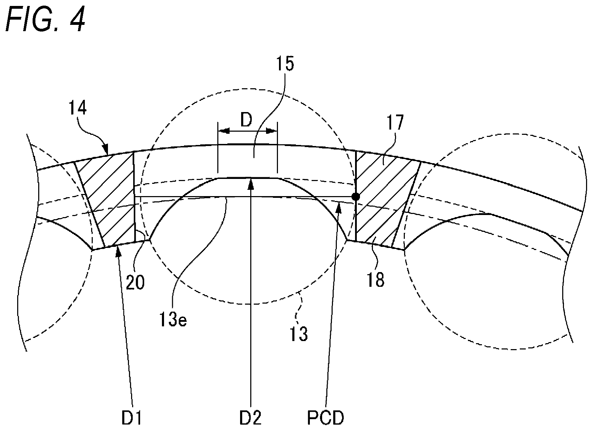

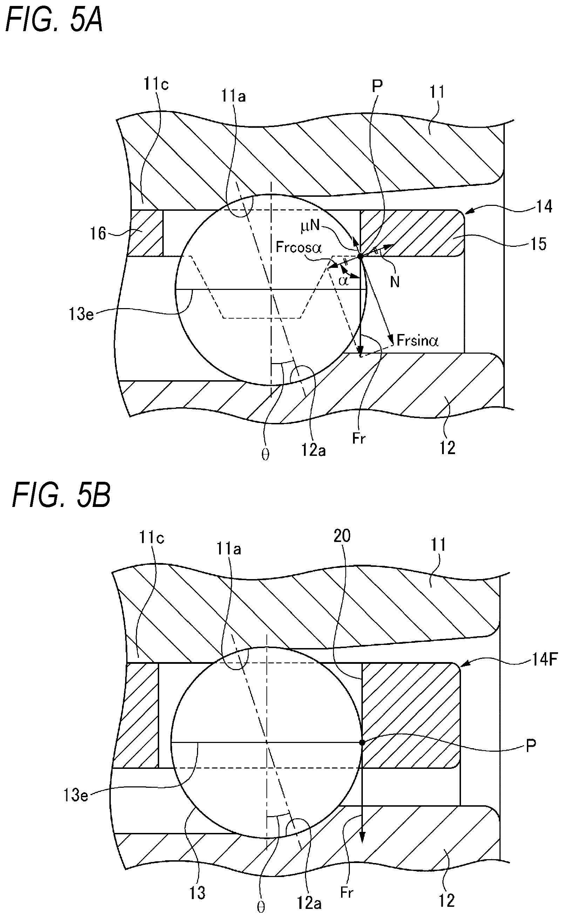

Accordingly, when the ball 13 drives the cage 14 in a rotation direction of an axis during operation of the bearing, as shown in Fig. 4, contact positions between the ball 13 and the cage 14 are an equator portion 13e for the ball 13 and an inner surface of the pocket 20 for the cage 14. On the other hand, as shown in Fig. 5A, when the cage 14 moves in the axial direction, contact positions between the cage 14 and the ball 13 are an outer diameter side of the equator portion 13e for the ball 13 and an inner diameter opening of the pocket 20 for the cage 14. The equator portion 13e of the ball 13 refers to an equator of the ball in a direction perpendicular to a shortest line connecting a center X of a rotation axis of the bearing and a center O of the ball 13. Figs. 5A and 5B show a state in which the cage 14 also moves radially outboard and comes into contact with the inner circumferential surface of the shoulder portion 11c of the outer ring 11.

Here, in an angular contact ball bearing in the related art as shown in Fig. 5B, lubrication between the cage 14 and the inner circumferential surface of the shoulder portion 11c of the outer ring 11 is not sufficient. When sliding friction between the cage 14 and the inner circumferential surface of the shoulder portion 11c is large, the cage 14 vibrates by itself in the radial direction and generates so-called cage noise due to excessive vibration energy of the cage 14. On the other hand, in the present embodiment, the radial movement of the cage 14 can be restricted by the contact of the inner diameter opening of the pocket 20 of the cage 14 with the ball 13. That is, when the cage 14 vibrates by itself and moves in the radial direction, a radial force Fr (force generated by vibration) acts on a contact portion P between the cage 14 and the ball 13 as shown in Fig. 5A. Fr is divided into a tangential force Fsinα and a normal force Fcosα by a curved surface of the ball 13. When Fcosα is equal to a vertical reaction force N and a friction coefficient between the ball 13 and the pocket 20 is µ, a frictional force of µN (= µFcosα) is generated at the contact point.

The contact portion P of the cage 14 moves along a curve of the ball 13, and a frictional force larger than that in the related art is generated. Due to the frictional force, the vibration of the cage 14 in the radial direction is attenuated and the vibration by itself is reduced (cage noise is reduced). On the other hand, in the angular contact ball bearing in the related art in which the inner diameter of the pocket 20 at the axial end portions is smaller than the PCD of the ball 13 in the state in which the cage 14 is in contact with the inner circumferential surface of the outer ring 11, no frictional force is generated from the force Fr in the radial direction. As shown in Fig. 4, a circumferential region D where the inner diameter opening of the pocket 20 having the inner diameter D2 is provided may be larger than a pocket gap between the ball 13 and the cage 14.

In the present embodiment, a thickness of the pillar portion 17 is large and a strength thereof is ensured since the convex portion 18 is provided on an inner diameter side of the pillar portion 17. In addition, since the inner diameter D1 of the cage 14 at the axially intermediate portion satisfies D1 + ΔL ≦ PCD, the pocket inner surface of the cage 14 comes into contact with the equator portion 13e of the ball 13. Accordingly, the ball 13 does not bite into the cage 14 in a wedge shape when the ball 13 competes against other balls 13 via the cage 14. In addition, since the size of the pocket gap in the rolling direction of the ball 13 does not change even when the cage 14 moves in the radial direction, vibration of the cage 14 in the circumferential direction can be reduced.

The inner diameter D2 of the pocket 20 at the axial end portions preferably satisfies PCD < D2, and more preferably satisfies PCD < D2 - ΔL.

That is, in a case of PCD ≧ D2 > PCD - ΔL, only when the cage 14 moves radially outboard and the inner diameter opening of the pocket 20 is in a circumferential phase radially outboard of PCD, the inner diameter opening of the pocket 20 can come into contact with the ball 13 by the cage 14 moving in the axial direction so that the radial movement of the cage 14 is regulated.

In a case of PCD + ΔL ≧ D2 > PCD, when the inner diameter opening of the pocket 20 is in a circumferential phase radially outboard of PCD, the inner diameter opening of the pocket 20 can come into contact with the ball 13 by the cage 14 moving in the axial direction so that the radial movement of the cage 14 is regulated.

In a case of D2 > PCD + ΔL, in all circumferential phases of the cage 14, the inner diameter opening of the pocket 20 can come into contact with the ball 13 by the cage 14 moving in the axial direction so that the radial movement of the cage 14 is regulated.

Further, the inner circumferential opening of the pocket 20 that comes into contact with the ball 13 may be C-chamfered or R-chamfered in order to prevent abrasion due to the contact with the ball 13. The C chamfering may be C0.1 or more (that is, points that are 0.1 mm or more from an intersection of the inner circumferential surface of the cage 14 with each of axial end surfaces of the pocket 20 are connected to intersect each of the surfaces at 45°) and more preferably C0.1 to C1. The R chamfering may be R0.1 (that is, a quadrant obtained by connecting points that are 0.1 mm or more from the intersection of the inner circumferential surface of the cage 14 with each of the axial end surfaces of the pocket 20) or more and more preferably R0.1 to R1.

According to the angular contact ball bearing 10 in the present embodiment as described above, the cage 14 has a step shaped inner circumferential surface and the inner diameter D2 of the pocket 20 at the axial end portions satisfies PCD < D2 + ΔL when the pitch circle diameter of the ball 13 is PCD and the diameter clearance of the radial guide clearance of the cage 14 is ΔL. Accordingly, when the cage 14 moves in the axial direction in an angular contact ball bearing including an outer ring guide cage, the ball 13 and the inner diameter opening of the pocket 20 come into contact with each other so that the radial movement of the cage 14 can be regulated and cage noise can be reduced.

Since the inner diameter D1 of the pocket 20 at the axially intermediate portion satisfies D1 + ΔL ≦ PCD, the thickness of the pillar portion 17 is large and the strength thereof is ensured. In addition, the contact between the pocket inner surface of the cage 14 and the equator portion 13e of the ball 13 is ensured, and biting between the ball 13 and the cage 14 and vibration of the cage 14 can be reduced.

Since the cage 14 includes the convex portion 18 protruding radially inboard at the axially intermediate portion, the inner diameter D1 of the pocket 20 at the axially intermediate portion that satisfies D1 + ΔL ≦ PCD can be easily set.

### (Second Embodiment)

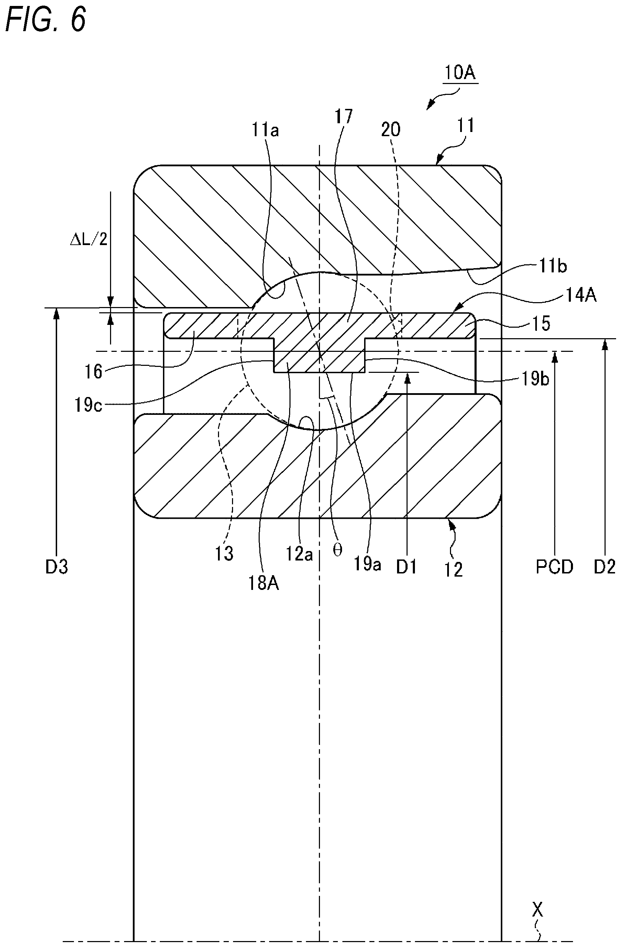

Fig. 6 is a sectional view of an angular contact ball bearing according to the second embodiment. An angular contact ball bearing 10A according to the second embodiment is different from the angular contact ball bearing 10 according to the first embodiment in a shape of a cage 14A. Other parts of the angular contact ball bearing 10A are the same as those of the angular contact ball bearing 10 according to the first embodiment and accordingly the same parts are denoted by the same reference numerals or signs and descriptions thereof will be simplified or omitted.

The cage 14A according to the present embodiment includes a convex portion 18A whose two axial end surfaces each have a rectangular cross section in a radial direction. That is, the inclined surfaces portions 19b, 19c are vertical surfaces that intersect with the center X of a rotating axis at 90°. Accordingly, the cage 14A can be easily processed.

### (Third Embodiment)

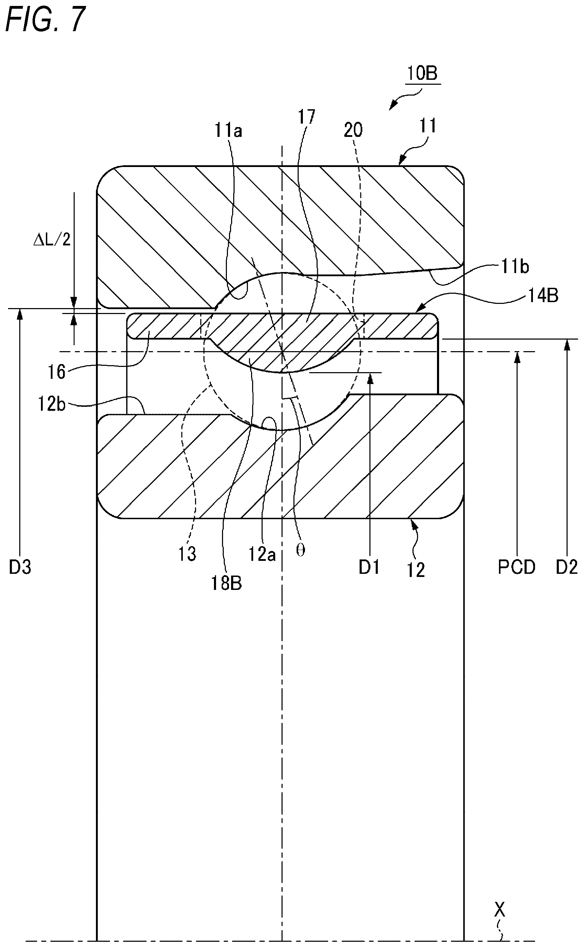

Fig. 7 is a sectional view of an angular contact ball bearing according to the third embodiment. An angular contact ball bearing 10B according to the third embodiment is different from the angular contact ball bearing 10 according to the first embodiment in a shape of a cage 14B. Other parts of the angular contact ball bearing 10B are the same as those of the angular contact ball bearing 10 according to the first embodiment and accordingly the same parts are denoted by the same reference numerals or signs and descriptions thereof will be simplified or omitted.

The cage 14B according to the present embodiment includes a convex portion 18B whose inner circumferential surface has a curved cross section. Accordingly, lubricant (particularly, grease) adhering to the inner circumferential surface of the convex portion 18B can smoothly move to an outer diameter side by a centrifugal force of rotation and circulation of the lubricant can be further improved.

In the second and the third embodiments, similarly to the first embodiment, the convex portions 18A, 18B define a pocket inner surface at a circumferential end portion and are not provided in the region D shown in Fig. 4.

### (Fourth Embodiment)

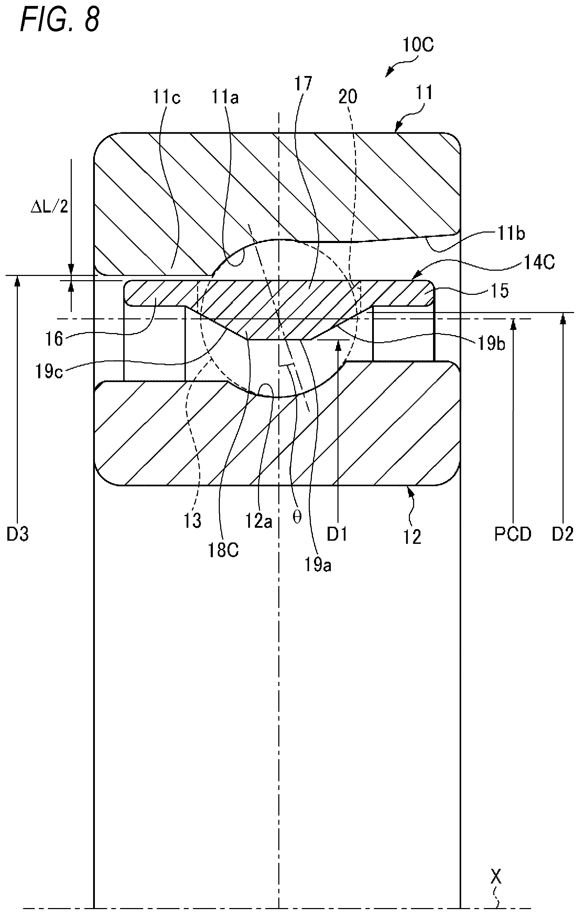

Fig. 8 is a sectional view of an angular contact ball bearing according to the fourth embodiment. An angular contact ball bearing 10C according to the fourth embodiment is different from the angular contact ball bearing 10 according to the first embodiment in a shape of a cage 14C. Other parts of the angular contact ball bearing 10C are the same as those of the angular contact ball bearing 10 according to the first embodiment and accordingly the same parts are denoted by the same reference numerals or signs and descriptions thereof will be simplified or omitted.

The cage 14C according to the fourth embodiment includes a convex portion 18C whose inclined surface portions 19b, 19c are respectively formed from the annular portions 15, 16 to the pillar portion 17 and have a reduced diameter toward an axially intermediate portion of the cage 14. That is, the convex portion 18C extends axially outboard from an inner diameter opening of the pocket 20 and crosses inner circumferential surfaces of the annular portions 15, 16.

For this reason, the inner diameter D2 of the pocket 20 at axial end portions is defined by the inclined surface portions 19b, 19c of the convex portion 18C.

In the cage 14C formed in this way, lubricant adhering to an inner circumferential surface of the pillar portion 17 easily flows out to the inner circumferential surfaces of the annular portions 15, 16 so that a discharging property of the lubricant is improved. A strength of the cage 14C can be improved since an entire periphery of the opening of the pocket 20 is covered by the convex portion 18C.

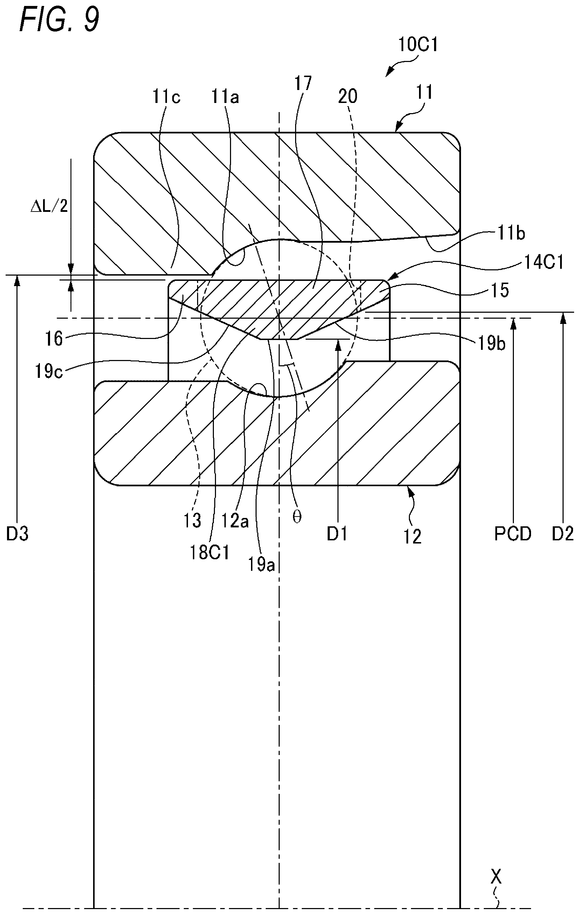

Fig. 9 is a sectional view of an angular contact ball bearing 10C1 according to a modification of the present embodiment. In this case, the inclined surface portions 19b, 19c of the cage 14C1 are formed from axial end surfaces of the annular portions 15, 16 to the pillar portion 17.

Also in this case, the inner diameter D2 of the pocket 20 at two axial end portions is defined by the inclined surface portions 19b, 19c of the convex portion 18C, and lubricant adhering to an inner circumferential surface of the pillar portion 17 easily flows out to the axial end surfaces via inner circumferential surfaces of the annular portions 15, 16 so that a discharging property of the lubricant is further improved.

### (Fifth Embodiment)

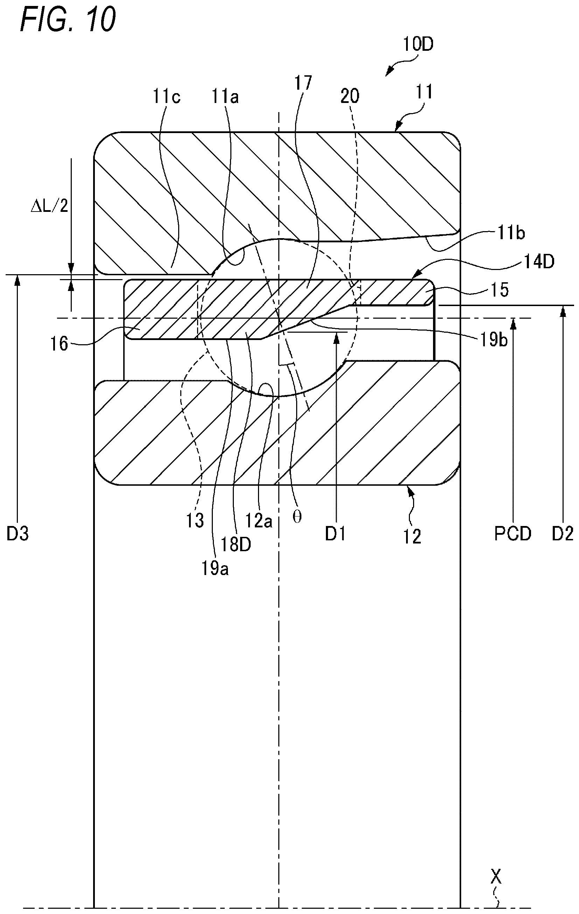

Fig. 10 is a sectional view of an angular contact ball bearing according to the fifth embodiment. An angular contact ball bearing 10D according to the fifth embodiment is different from the angular contact ball bearing 10 according to the first embodiment in a shape of a cage 14D. Other parts of the angular contact ball bearing 10D are the same as those of the angular contact ball bearing 10 according to the first embodiment and accordingly the same parts are denoted by the same reference numerals or signs and descriptions thereof will be simplified or omitted.

The cage 14D according to the fifth embodiment has a step shaped inner circumferential surface. The annular portion 15 on one side in an axial direction has a cut-out inner circumferential surface and is thinner than the annular portion 16 on the other side in the axial direction. That is, the inner circumferential surface of the annular portion 15 on one side has a larger diameter than an inner circumferential surface of the annular portion 16 on the other side. In this case, the inner circumferential surface of the annular portion 15 on one side and the inner circumferential surface of the annular portion 16 on the other side are continuous by the inclined surface portion 19b and the inner diameter D1 of the pillar portion 17 at an axially intermediate portion is defined by the inclined surface portion 19b of the convex portion 18D.

Accordingly, in the cage 14D, the ball 13 and an inner diameter opening of the pocket 20 on the annular portion 15 side come into contact with each other when the cage 14D moves in the axial direction. By doing so, a radial movement of the cage 14 can be regulated and cage noise can be reduced. In addition, the annular portion 16 is thick so that a strength of the cage 14D can be improved.

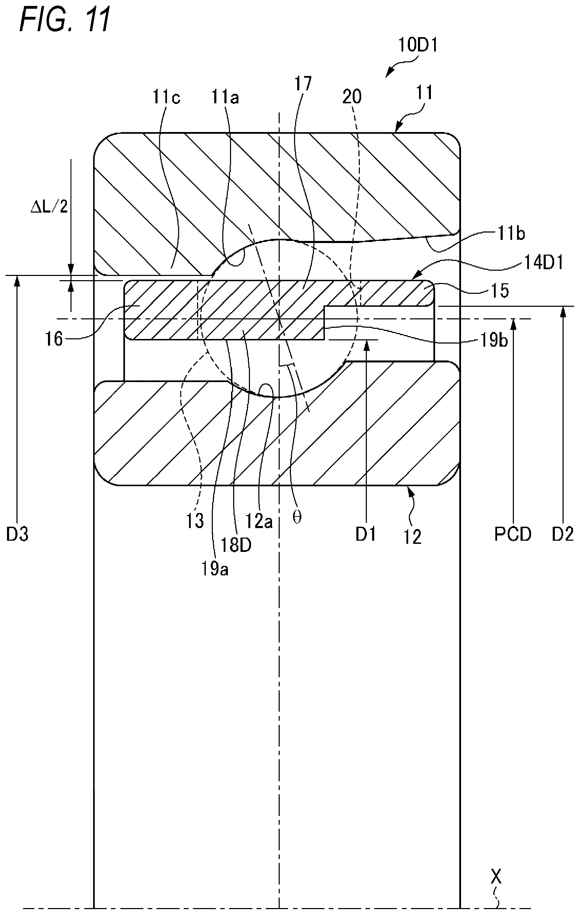

Fig. 11 is a sectional view of an angular contact ball bearing 10D1 according to a first modification of the present embodiment. In this case, a cage 14D1 has a vertical surface that intersects the inclined surface portion 19b at 90° relative to the center X of a rotation axis. The inner diameter D1 of the pillar portion 17 at an axially middle portion is defined by the cylindrical surface portion 19a of the convex portion 18D.

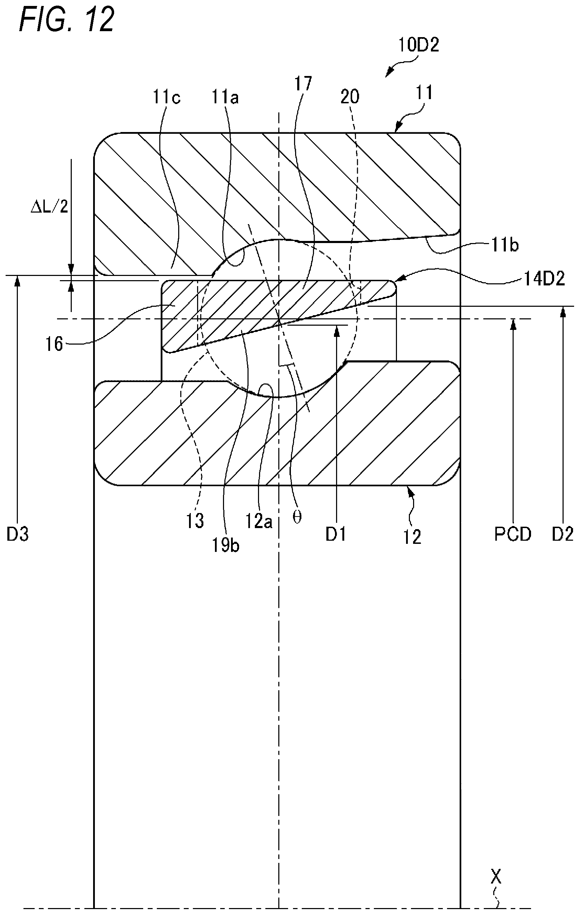

Fig. 12 is a sectional view of an angular contact ball bearing 10D2 according to a second modification of the present embodiment. In this case, an inner circumferential surface of the cage 14D2 is defined by the uniform inclined surface portion 19b extending to axial end surfaces of the annular portions 15, 16 across the entire axial direction.

Also in the case, in the cage 14D2, the ball 13 and an inner diameter opening of the pocket 20 on the annular portion 15 side come into contact with each other when the cage 14D2 moves in the axial direction. By doing so, a radial movement of the cage 14 can be regulated and cage noise can be reduced. In addition, the annular portion 16 is thick so that a strength of the cage 14D2 can be improved.

In the present embodiment, the annular portion 16 on a bearing back surface side that is guided by an inner circumferential surface of the outer ring 11 is thick and the annular portion 15 on a bearing front surface side is thin, and the annular portion 15 on the bearing front surface side may be thick and the annular portion 16 on the bearing back surface side may be thin.

### (Sixth Embodiment)

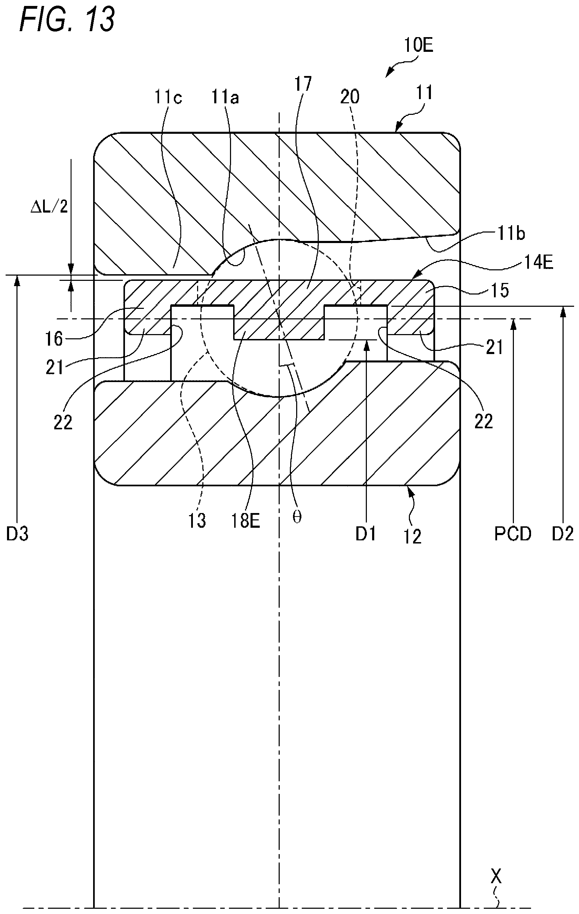

Fig. 13 is a sectional view of an angular contact ball bearing according to the sixth embodiment. An angular contact ball bearing 10E according to the sixth embodiment is different from the angular contact ball bearing 10 according to the first embodiment in a shape of a cage 14E. Other parts of the angular contact ball bearing 10E are the same as those of the angular contact ball bearing 10 according to the first embodiment and accordingly the same parts are denoted by the same reference numerals or signs and descriptions thereof will be simplified or omitted.

The cage 14E according to the sixth embodiment has a step shaped inner circumferential surface. That is, the pillar portion 17 includes a pillar portion side convex portion 18E protruding radially inboard from a position away from axial end portions of the pocket 20 inside in the axial direction. The pair of annular portions 15, 16 respectively include annular portion side convex portions 21, 21 protruding radially inboard from positions away from axial end portions of the pocket 20 outside in the axial direction.

Accordingly, in the cage 14E, the ball 13 and an inner diameter opening of the pocket 20 come into contact with each other when the cage 14E moves in the axial direction. By doing so, a radial movement of the cage 14 can be regulated and cage noise can be reduced. In addition, a thickness of each of the annular portions 15, 16 of the cage 14E is large and accordingly a strength can be improved. Further, annular grooves 22 opened to the pocket 20 are defined on an inner diameter side by the pillar portion side convex portion 18E and the annular portion side convex portions 21. Accordingly, lubricant can be stored in the annular grooves 22 and be supplied to the pockets 20.

The present invention is not limited to the above-described embodiments and modifications, improvements, and the like can be made as defined in the appended claims.

This present application is based on a Japanese patent application (No. 2018-011353) filed on Jan 26, 2018.

### Reference Signs List

- 10, 10A, 10B, 10C, 10C1, 10D, 10D1, 10D2, and 10E:: angular contact ball bearing
- 11:: outer ring
- 11a:: outer ring raceway surface
- 12:: inner ring
- 12a:: inner ring raceway surface
- 13:: ball
- 14, 14A, 14B, 14C, 14C1, 14D, 14D1, 14D2, 14E:: cage
- 15, 16:: annular portion
- 17:: pillar portion
- 18:: convex portion, pillar portion side convex portion
- 19a:: cylindrical surface portion
- 19b, 19c:: inclined surface portion
- 20:: pocket
- 21:: annular portion side convex portion
- D1:: inner diameter of pocket at axially intermediate portion
- D2:: inner diameter of pocket at axial end portion
- D3:: inner diameter of inner circumferential surface that guides cage
- PCD:: pitch circle diameter of ball
- θ:: contact angle

## Claims

1. An angular contact ball bearing comprising: an outer ring having an outer ring raceway surface on an inner circumferential surface, an inner ring having an inner ring raceway surface on an outer circumferential surface, a plurality of balls rollably arranged at a predetermined contact angle between the outer ring raceway surface and the inner ring raceway surface, and an outer ring guided cage having pockets that rollably hold the plurality of balls,
wherein the cage includes a pair of annular portions and a plurality of pillar portions arranged at predetermined intervals in a circumferential direction, the plurality of pillar portions connecting the pair of annular portions in an axial direction,
wherein the cage has a step shaped or an inclined inner circumferential surface,
**characterised in that** when a pitch circle diameter of the ball is PCD and a diameter clearance of a radial guide clearance of the cage is ΔL, an inner diameter D2 of the pocket at axial end portions satisfies PCD < D2 + ΔL.

2. The angular contact ball bearing according to claim 1, wherein an inner diameter D1 of the pocket at an axially intermediate portion satisfies D1 + ΔL ≦ PCD.

3. The angular contact ball bearing according to claim 1 or 2, wherein the cage includes a convex portion protruding radially inboard at an axially intermediate portion of the cage.

4. The angular contact ball bearing according to any one of claims 1 to 3, wherein an inner circumferential surface of one of the pair of annular portions has a larger diameter than an inner circumferential surface of the other one of the pair of annular portions.

5. The angular contact ball bearing according to any one of claims 1 to 3, wherein the cage includes a pair of inclined surface portions on the inner circumferential surface of the cage, each of the pair of inclined surface portions crossing the pillar portion from a respective one of the annular portions and having a reduced diameter toward an axially intermediate portion of the cage.

6. The angular contact ball bearing according to any one of claims 1 to 3, wherein each of the pillar portions includes a pillar portion side convex portion protruding radially inboard from a position away from the axial end portions of the pocket inside in the axial direction, and
wherein each of the pair of annular portions includes an annular portion side convex portion protruding radially inboard from a position away from the axial end portions of the pocket outside in the axial direction.

## Patentansprüche

1. Schrägkugellager, das umfasst:
einen Außenring mit einer Außenring-Laufbahnfläche an einer Innenumfangsfläche,
einen Innenring mit einer Innenring-Laufbahnfläche an einer Außenumfangsfläche,
eine Vielzahl von Kugeln, die in einem vorgegebenen Kontaktwinkel zwischen der Außenring-Laufbahnfläche und der Innenring-Laufbahnfläche so angeordnet sind, dass sie rollen können, sowie einen von dem Außenring geführten Käfig mit Taschen umfasst, die die Vielzahl von Kugeln so halten, dass sie rollen können,
wobei der Käfig ein Paar ringförmiger Abschnitte und eine Vielzahl von Säulenabschnitten enthält, die in vorgegebenen Abständen in einer Umfangsrichtung angeordnet sind, und die Vielzahl von Säulenabschnitten das Paar ringförmiger Abschnitte in einer axialen Richtung verbindet,
und der Käfig eine stufenförmige oder eine geneigte Innenumfangsfläche aufweist, **dadurch gekennzeichnet, dass,** wenn ein Teilkreisdurchmesser der Kugel PCD ist und ein Durchmesserspiel eines radialen Führungsspiels des Käfigs ΔL ist, für einen Innendurchmesser D2 der Tasche an axialen Endabschnitten PCD < D2 + ΔL gilt.

2. Schrägkugellager nach Anspruch 1, wobei für einen Innendurchmesser D1 der Tasche an einem axialen Zwischenabschnitt D1 + ΔL ≤ PCD gilt.

3. Schrägkugellager nach Anspruch 1 oder 2, wobei der Käfig einen konvexen Abschnitt enthält, der an einem axialen Zwischenabschnitt des Käfigs radial nach innen vorsteht.

4. Schrägkugellager nach einem der Ansprüche 1 bis 3, wobei eine Innenumfangsfläche eines der paarigen ringförmigen Abschnitte einen größeren Durchmesser hat als eine Innenumfangsfläche des anderen der paarigen ringförmigen Abschnitte.

5. Schrägkugellager nach einem der Ansprüche 1 bis 3, wobei der Käfig ein Paar geneigter Flächenabschnitte an der Innenumfangsfläche des Käfigs aufweist, und jeder der paarigen geneigten Flächenabschnitte den Säulenabschnitt von einem entsprechenden der ringförmigen Abschnitte her kreuzt und einen in Richtung eines axialen Zwischenabschnitts des Käfigs reduzierten Durchmesser aufweist.

6. Schrägkugellager nach einem der Ansprüche 1 bis 3, wobei jeder der Säulenabschnitte einen konvexen Abschnitt an der Säulenseite enthält, der von einer Position von den axialen Endabschnitten der Taschen-Innenseite in der axialen Richtung weg radial nach innen vorsteht, und
jeder der paarigen ringförmigen Abschnitte einen konvexen Abschnitt an der Seite des ringförmigen Abschnitts enthält, der von einer Position von den axialen Endabschnitten der Taschen-Außenseite in der axialen Richtung weg radial nach innen vorsteht.

## Revendications

1. Roulement à billes à contact angulaire comprenant :
une bague extérieure présentant une surface de piste de bague extérieure sur une surface circonférentielle intérieure, une pluralité de billes disposées en roulement à un angle de contact prédéterminée entre la surface de piste de bague extérieure et la surface de piste de bague intérieure, et une cage guidée de bague extérieure présentant des poches qui maintiennent en roulement la pluralité de billes,
dans lequel la cage inclut une paire de parties annulaires et une pluralité de parties de colonne disposées à des intervalles prédéterminés dans une direction circonférentielle, la pluralité de parties de colonne connectant la paire de parties annulaires dans une direction axiale,
dans lequel la cage présente une surface circonférentielle intérieure inclinée ou en forme de pas, **caractérisée en ce que** lorsqu'un diamètre de cercle primitif de la bille est le PCD (Pitch Circle Diameter) et une garde de diamètre d'une garde de guide radial de la cage est ΔL, un diamètre intérieur D2 de la poche sur des parties d'extrémité axiale satisfait PCD < D2 + ΔL.

2. Le roulement à billes à contact angulaire selon la revendication 1, dans lequel un diamètre intérieur D1 de la poche sur une partie axialement intermédiaire satisfait D1 + ΔL ≤ PCD.

3. Le roulement à billes à contact angulaire selon la revendication 1 ou 2, dans lequel la cage inclut une partie convexe débordant radialement vers l'intérieur sur une partie axialement intermédiaire de la cage.

4. Le roulement à billes à contact angulaire selon l'une quelconque des revendications 1 à 3, dans lequel une surface circonférentielle intérieure d'une de la paire de parties annulaires présente un diamètre plus important qu'une surface circonférentielle intérieure de l'autre de la paire de parties annulaires.

5. Le roulement à billes à contact angulaire selon l'une quelconque des revendications 1 à 3, dans lequel la cage inclut une paire de parties de surface inclinée sur la surface circonférentielle intérieure de la cage, chacune de la paire de parties de surface inclinée traversant la partie de colonne depuis une respective des parties annulaires et présentant un diamètre réduit vers une partie axialement intermédiaire de la cage.

6. Le roulement à billes à contact angulaire selon l'une quelconque des revendications 1 à 3, dans lequel chacune des parties de colonne inclut une partie convexe latérale de partie de colonne débordant radialement vers l'intérieur depuis une position éloignée des parties d'extrémité axiale de la poche à l'intérieur dans la direction axiale, et
dans lequel chacune de la paire de parties annulaires inclut une partie convexe latérale de partie annulaire débordant vers l'intérieur depuis une position éloignée de des parties d'extrémité radiale de la poche à l'extérieur dans la direction axiale.
